# EUROPEAN PATENT APPLICATION

(11) **EP 4 683 354 A1**
(43) Date of publication of application: **21.01.2026**
(21) Application number: 23931820.7
(22) Date of filing: 07.12.2023
(51) Int. Cl.: H04W 4/06

(54) **MULTICAST SERVICE TRANSMISSION METHOD AND APPARATUS**

(30) Priority: 04.04.2023 CN 202310399193
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Isarpatent
(86) International application number: PCT/CN2023/137270
(87) International publication number: WO 2024/207775

(57) **Abstract**

This application provides a method and an apparatus for transmission of a multicast service, to perform activation or configuration update of a multicast service for a terminal device in a radio resource control (RRC) inactive state, thereby meeting a requirement that the terminal device in the RRC inactive state receives the multicast service. The method includes: receiving, by a terminal device, first indication information broadcast by a network device, the first indication information being used to indicate activation or configuration update of a first multicast service, and the terminal device being in an RRC inactive state; obtaining, by the terminal device, configuration information of the first multicast service based on the first indication information, and receiving data of the first multicast service based on the configuration information of the first multicast service.

## Description

This application claims priority to Chinese Patent Application No. 202310399193.1, filed with the China National Intellectual Property Administration on April 4, 2023 and entitled "METHOD AND APPARATUS FOR TRANSMISSION OF MULTICAST SERVICE", which is incorporated by reference in its entirety.

### TECHNICAL FIELD

This application relates to the field of communication technologies, and in particular, to a method and an apparatus for transmission of a multicast service.

### BACKGROUND

A multimedia broadcast and multicast service (multimedia broadcast and multicast service, MBMS), as a communication mode capable of saving network resources, is always an important research direction of the 3rd generation partnership project (3rd generation partnership project, 3GPP). A current mobile communication technology, for example, a 5th generation mobile communication technology (5th generation mobile communication technology, 5G) supports two modes, which are respectively a broadcast (broadcast) mode and a multicast (multicast) mode. Terminal devices receiving a broadcast service may operate in any radio resource control (radio resource control, RRC) status, that is, a network device does not need to sense existence of the terminal devices receiving the broadcast service. In this mode, the network device sends the broadcast service in a cell, and a terminal operating in any status can receive the broadcast service as required. However, a standard stipulates that only a terminal device in an RRC connected state can receive the multicast service. Because multicast essentially schedules transmission for a group of a plurality of specific terminal devices, the network device needs to sense existence of the terminal devices, perform same configuration for a same group of terminal devices, and then perform multicast transmission.

It is considered that a terminal device in an RRC inactive state may also probably need to receive the multicast service. However, there is no unicast connection. Therefore, how to send a multicast service start (or referred to as activation) notification and update a configuration of the multicast service is a technical problem that needs to be urgently resolved currently.

### SUMMARY

This application provides a method and an apparatus for transmission of a multicast service to perform activation or configuration update of a multicast service for a terminal device in a radio resource control (RRC) inactive state, thereby meeting a requirement that the terminal device in the RRC inactive state receives the multicast service, and improving user experience.

According to a first aspect, a method for transmission of a multicast service is provided and includes: receiving, by a terminal device, first indication information broadcast by a network device, the first indication information being used to indicate activation or configuration update of a first multicast service, and the terminal device being in a radio resource control (RRC) inactive state; obtaining, by the terminal device, configuration information of the first multicast service based on the first indication information; and receiving, by the terminal device, data of the first multicast service based on the configuration information of the first multicast service.

It should be understood that the foregoing first multicast service may be one multicast service, or may be a plurality of multicast services. A quantity of first multicast services is not limited in embodiments of this application. In a possible implementation, there is one first multicast service, and the first multicast service is a to-be-activated multicast service or a multicast service whose configuration is to be updated. In another possible implementation, there are a plurality of first multicast services, some multicast services in the plurality of first multicast services are to-be-activated multicast services, and other multicast services are tasks whose configuration is to be updated.

It should be further understood that the foregoing activation means that a new multicast service is about to start, and the foregoing configuration update means that a configuration of a multicast service that has started changes and needs to be updated.

In embodiments of this application, the network device sends the first indication information used to indicate activation or configuration update of the first multicast service in a broadcast form, so that the terminal device in the RRC inactive state can receive the first indication information, obtain the configuration information of the first multicast service based on the first indication information, and further receive the data of the first multicast service. According to the method provided in embodiments of this application, activation or configuration update of a multicast service may be performed for the terminal device in the radio resource control (RRC) inactive state. In other words, even if the terminal device does not have a unicast connection, the terminal device may also receive an activation or configuration update notification of the multicast service from the network device, thereby meeting a requirement that the terminal device in the RRC inactive state receives the multicast service, and improving user experience.

With reference to the first aspect, in some implementations of the first aspect, the first indication information includes at least one of the following: an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

It should be understood that the identifier of the first multicast service is used to uniquely identify the first multicast service. For example, the identifier of the first multicast service may be an ID of the first multicast service or a TMGI of the first multicast service.

It should be understood that the configuration identifier of the first multicast service is used to uniquely identify a configuration of the first multicast service. Because the network device may configure first multicast services for a plurality of groups of terminal devices, configurations of first multicast services for different groups of terminal devices may be different, and therefore need to be distinguished by using configuration identifiers. In the foregoing plurality of groups of terminal devices, configurations of the first multicast services for some terminal devices may be changed, and configurations of the first multicast services for other terminal devices are not changed.

It should be further understood that in addition to the foregoing first update manner and second update manner, the configuration update manner may alternatively be another manner. This is not limited in embodiments of this application.

In a possible implementation, the network device may carry the foregoing information when a capacity of a message corresponding to the first indication information is rich, to explicitly indicate the terminal device, to improve processing efficiency of the terminal device, thereby improving subsequent transmission efficiency of the multicast service.

With reference to the first aspect, in some implementations of the first aspect, the first indication information includes the identifier of the first multicast service and/or the configuration identifier of the first multicast service; and the obtaining, by the terminal device, configuration information of the first multicast service based on the first indication information includes: obtaining, by the terminal device, the configuration information of the first multicast service if an identifier of a multicast service added by the terminal device is included in the first indication information; and/or obtaining, by the terminal device, the configuration information of the first multicast service if a configuration identifier of a multicast service added by the terminal device is included in the first indication information.

It should be understood that, before the terminal device receives the first indication information broadcast by the network device, the terminal device has completed registration for a multicast service in which the terminal device is interested through interaction with the network device. The multicast service added by the terminal device is the multicast service for which the terminal device has completed registration.

When the first indication information includes the identifier of the first multicast service, the terminal device may directly determine, based on the identifier, which multicast service is about to start or whose configuration is to be updated. If a multicast service is the multicast service in which the terminal device is interested or having started to be received, the terminal device obtains the configuration information of the first multicast service. If a multicast service is not the multicast service in which the terminal device is interested or having started to be received, the terminal device may not perform any processing. In this way, processing efficiency of the terminal device may be improved, and another terminal device that does not need to update the first multicast service is prevented from obtaining the configuration information of the first multicast service, avoiding wasting power consumption.

When the first indication information includes the configuration identifier of the first multicast service, the terminal device may directly determine, based on the configuration identifier, a multicast service corresponding to which configuration is about to start or has configuration update to be performed. If the configuration is a configuration in which the terminal device is interested or a configuration of the multicast service having started to be received, the terminal device obtains the configuration information of the first multicast service. If the configuration is not a configuration in which the terminal device is interested or a configuration of the multicast service having started to be received, the terminal device may not perform any processing. In this way, processing efficiency of the terminal device may be improved, and another terminal device that does not need to update the configuration of the first multicast service is prevented from obtaining the configuration information of the first multicast service, avoiding wasting power consumption.

With reference to the first aspect, in some implementations of the first aspect, the first indication information includes the configuration update manner of the first multicast service; and the obtaining, by the terminal device, configuration information of the first multicast service based on the first indication information includes: obtaining, by the terminal device, the configuration information of the first multicast service based on the first update manner or the second update manner.

Because a configuration of a multicast service or a multicast service aims at a particular group of terminal devices, the network device may use different configuration update manners based on a quantity of terminal devices in the group. In this way, use efficiency of network resources needed for configuration update can be improved, and impact on a terminal device that does not need configuration update can be reduced as much as possible.

In a possible implementation, if there are a large quantity (greater than or equal to a first preset value) of terminal devices needing to perform configuration update, the network device may configure the first update manner for the terminal device, and the terminal device performs configuration update by using the first update manner, that is, the MCCH. Because the MCCH is a common control channel, when the network device sends one piece of updated configuration information, all terminal devices needing to perform configuration update receive the new configuration information. In this way, the use efficiency of network resources needed for configuration update can be improved.

In another possible implementation, if there are a small quantity (less than or equal to a second preset value) of terminal devices needing to perform configuration update, the network device may configure the second update manner for the terminal device, and the terminal device performs configuration update by using the second update manner, that is, a unicast manner, to avoid that the network device increases a probability that another terminal device reads the MCCH or a data volume of reading the MCCH, to notify the small quantity of terminal devices, thereby reducing impact on terminal devices that do not need to perform configuration update on the first multicast service.

It should be understood that in addition to the foregoing first update manner and second update manner, the configuration update manner provided in embodiments of this application may further be another manner. This is not limited in this application.

It should be further understood that, when the first indication information indicates the configuration update manner, the terminal device may obtain the configuration information of the first multicast service based on the configuration update manner indicated in the first indication information. When the first indication information does not indicate the configuration update manner, the terminal device may obtain the configuration information of the first multicast service in any manner. This is not limited in embodiments of this application.

With reference to the first aspect, in some implementations of the first aspect, the first indication information is carried in any one of the following: a system message; downlink control information (DCI) of the MCCH; or a paging message.

It should be understood that the system message may be a system message SIB, for example, SIB20 or another system message. This is not specifically limited in this application.

With reference to the first aspect, in some implementations of the first aspect, the first indication information is carried in first DCI of an MCCH applied to a broadcast service, and the first DCI includes at least one of the following: a bit field used to indicate activation of a conventional broadcast new service; a bit field used to indicate configuration update of a conventional broadcast service; a bit field used to indicate activation of the RRC inactive multicast service; or a bit field used to indicate configuration update of the RRC inactive multicast service.

According to the method provided in embodiments of this application, in a manner in which the conventional broadcast service and the RRC inactive multicast service share the MCCH, the terminal device in the RRC inactive state may select, based on the received first indication information, a conventional broadcast service or a multicast service in which the terminal device is interested, to perform corresponding service activation or configuration update, thereby not only implementing reception of the multicast service by the terminal device in the RRC inactive state, but also saving channel resources of the MCCH.

With reference to the first aspect, in some implementations of the first aspect, the first indication information is carried in second DCI of the MCCH applied to the RRC inactive multicast service, and an RNTI used to decode the second DCI is different from an RNTI used to decode first DCI of an MCCH applied to a broadcast service.

It should be understood that "the RNTI used to decode the DCI" may also be referred to as "the RNTI of the DCI", "the RNTI associated with the DCI", and the like, and they have a same concept and can be interchanged.

In embodiments of this application, the first indication information is carried in the second DCI of the MCCH applied to the RRC inactive multicast service. That is, the RRC inactive multicast service and the broadcast service respectively correspond to different MCCHs. In this case, the terminal device may decode the first DCI by using the RNTI of the first DCI, and decode the second DCI by using the RNTI of the second DCI.

With reference to the first aspect, in some implementations of the first aspect, the terminal device obtains the configuration information of the MCCH applied to the RRC inactive multicast service; and the terminal device obtains the second DCI based on the configuration information of the MCCH applied to the RRC inactive multicast service.

For example, the configuration information of the MCCH applied to the RRC inactive multicast service may include: a time-frequency resource of the MCCH applied to the RRC inactive multicast service, a transmission period of the MCCH applied to the RRC inactive multicast service, the RNTI used to decode the second DCI, and the like.

It should be understood that, the RNTI used to decode the second DCI may be configured by the network device for the terminal device, or may be agreed on in a protocol. This is not specifically limited in embodiments of this application.

In embodiments of this application, the MCCH applied to the RRC inactive multicast service is introduced, and the first indication information is carried by using the second DCI of the MCCH. The terminal device may select, based on the received first indication information, the multicast service in which the terminal device is interested, and perform corresponding service activation or configuration update. Because the first indication information is carried in the second DCI of the MCCH applied to the RRC inactive multicast service, and activation or configuration update information of the broadcast service is carried in the first DCI of the MCCH applied to the broadcast service, it can be avoided that the terminal device corresponding to the broadcast service unnecessarily periodically reads the MCCH due to activation or a configuration change of the multicast service, thereby reducing power consumption of the terminal device.

With reference to the first aspect, in some implementations of the first aspect, the obtaining, by the terminal device, the configuration information of the MCCH applied to the RRC inactive multicast service includes: obtaining, by the terminal device by using a system message broadcast by the network device or by using unicast signaling when an RCC connection between the terminal device and the network device is released, the configuration information of the MCCH applied to the RRC inactive multicast service.

With reference to the first aspect, in some implementations of the first aspect, the second DCI includes: a bit field used to indicate activation of the RRC inactive multicast service; and/or a bit field used to indicate configuration update of the RRC inactive multicast service.

With reference to the first aspect, in some implementations of the first aspect, the first indication information is carried in the paging message; and the first indication information further includes an identifier of the terminal device that is to activate the first multicast service or update a configuration of the first multicast service.

It should be further understood that the terminal device may be movable. When a target terminal device paged by the network device is out of a coverage range of the network device, the network device sends second indication information to another network device. The second indication information is used to indicate paging the terminal device that is to activate the first multicast service or update a configuration of the first multicast service.

In embodiments of this application, the network device may send the first indication information to the corresponding terminal device in a paging manner, to perform activation or configuration update of the multicast service for the terminal device in the radio resource control (RRC) inactive state, and prevent the terminal device from periodically reading the DCI of the MCCH, thereby reducing power consumption of the terminal device.

According to a second aspect, this application provides a method for transmission of a multicast service, including: determining, by a network device, first indication information, the first indication information being used to indicate activation or configuration update of a first multicast service; and broadcasting, by the network device, the first indication information.

With reference to the second aspect, in some implementations of the second aspect, the first indication information includes at least one of the following: an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

With reference to the second aspect, in some implementations of the second aspect, the first indication information is carried in any one of the following: a system message; downlink control information (DCI) of the MCCH; or a paging message.

With reference to the second aspect, in some implementations of the second aspect, the first indication information is carried in first DCI of an MCCH applied to a broadcast service, and the first DCI includes at least one of the following: a bit field used to indicate activation of a conventional broadcast new service; a bit field used to indicate configuration update of a conventional broadcast service; a bit field used to indicate activation of the RRC inactive multicast service; or a bit field used to indicate configuration update of the RRC inactive multicast service.

With reference to the second aspect, in some implementations of the second aspect, the first indication information is carried in second DCI of the MCCH applied to the RRC inactive multicast service, and an RNTI used to decode the second DCI is different from an RNTI used to decode first DCI of an MCCH applied to a broadcast service.

With reference to the second aspect, in some implementations of the second aspect, the network device sends the configuration information of the MCCH applied to the RRC inactive multicast service.

With reference to the second aspect, in some implementations of the second aspect, the sending, by the network device, the configuration information of the MCCH applied to the RRC inactive multicast service includes: sending, by the network device by using a system message or by using unicast signaling when an RCC connection between a terminal device and the network device is released, the configuration information of the MCCH applied to the RRC inactive multicast service.

With reference to the second aspect, in some implementations of the second aspect, the second DCI includes: a bit field used to indicate activation of the RRC inactive multicast service; and/or a bit field used to indicate configuration update of the RRC inactive multicast service.

With reference to the second aspect, in some implementations of the second aspect, the first indication information is carried in the paging message; and the first indication information further includes an identifier of the terminal device that is to activate the first multicast service or update the configuration of the first multicast service.

With reference to the second aspect, in some implementations of the second aspect, the method further includes: sending, by the network device, second indication information to another network device, the second indication information being used to indicate paging a terminal device corresponding to the to-be-activated first multicast service or the to-be-updated configuration of the first multicast service.

With reference to the second aspect, in some implementations of the second aspect, the second indication information includes at least one of the following: an identifier of the terminal device; an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

According to a third aspect, an apparatus for transmission of a multicast service is provided, to perform the method in any possible implementation of the first aspect or the second aspect. Specifically, the apparatus includes a module configured to perform the method in any possible implementation of the first aspect or the second aspect.

According to a fourth aspect, another apparatus for transmission of a multicast service is provided, including a processor, the processor being coupled to a storage, and being configured to execute instructions in the storage, to implement the method in any possible implementation of the first aspect or the second aspect. Optionally, the apparatus further includes a storage. Optionally, the apparatus further includes a communication interface, and the processor is coupled to the communication interface.

In an implementation, the apparatus is a terminal device. When the apparatus is the terminal device, the communication interface may be a transceiver, or an input/output interface.

In another implementation, the apparatus is a chip disposed in the terminal device. When the apparatus is the chip disposed in the terminal device, the communication interface may be an input/output interface.

In an implementation, the apparatus is a network device. When the apparatus is the network device, the communication interface may be a transceiver, or an input/output interface.

In another implementation, the apparatus is a chip disposed in the network device. When the apparatus is a chip disposed in the network device, the communication interface may be an input/output interface.

According to a fifth aspect, a processor is provided, including an input circuit, an output circuit, and a processing circuit. The processing circuit is configured to receive a signal by using the input circuit, and transmit a signal by using the output circuit, causing the processor to perform the method in any possible implementation of the first aspect or the second aspect.

In a specific implementation process, the processor may be a chip, the input circuit may be an input pin, the output circuit may be an output pin, and the processing circuit may be a transistor, a gate circuit, a flip-flop, various logic circuits, or the like. An input signal received by the input circuit may be received and input by, for example, a receiver, a signal output by the output circuit may be output to, for example, a transmitter and transmitted by the transmitter, and the input circuit and the output circuit may be a same circuit, where the circuit is separately used as the input circuit and the output circuit at different moments. Specific implementations of the processor and various circuits are not limited in embodiments of this application.

According to a sixth aspect, a processing apparatus is provided, including a processor and a storage. The processor is configured to read instructions stored in the storage, receive a signal by using a receiver, and transmit a signal by using a transmitter, to perform the method in any possible implementation of the first aspect or the second aspect.

Optionally, there are one or more processors, and there are one or more memories.

Optionally, the storage may be integrated with the processor, or the storage and the processor may be separately disposed.

In a specific implementation process, the storage may be a non-transitory (non-transitory) storage, like a read-only memory (read-only memory, ROM). The storage and the processor may be integrated on a same chip, or may be disposed on different chips. A type of the storage and a manner of disposing the storage and the processor are not limited in embodiments of this application.

It should be understood that, for a related data interaction process, for example, sending indication information may be a process of outputting indication information from the processor, and receiving capability information may be a process of receiving and inputting capability information by the processor. Specifically, data processed and output may be output to the transmitter, input data received by the processor may be from the receiver. The transmitter and the receiver may be collectively referred to as a transceiver.

The processing apparatus in the sixth aspect may be a chip. The processor may be implemented by hardware, or may be implemented by software. When the processor is implemented by hardware, the processor may be a logic circuit, an integrated circuit, or the like. When implemented by the software, the processor may be a general-purpose processor and implemented by reading software code stored in the storage. The storage may be integrated inside the processor, or may be located outside the processor and independently exist.

According to a seventh aspect, a computer program product is provided, and the computer program product includes: a computer program (which may also be referred to as code, or instructions), the computer program, when run, causing a computer to perform the method in any possible implementation of the first aspect or the second aspect.

According to an eighth aspect, a computer-readable storage medium is provided. The computer-readable storage medium stores a computer program (which may also be referred to as code, or instructions), the computer program, when run on a computer, causing the computer to perform the method in any possible implementation of the first aspect or the second aspect.

### BRIEF DESCRIPTION OF DRAWINGS

FIG. 1 is a schematic diagram of a communication system applicable to an embodiment of this application;
FIG. 2 is a schematic flowchart of a method for transmission of a broadcast service;
FIG. 3 is a schematic flowchart of a method for transmission of a multicast service;
FIG. 4 is a schematic flowchart of a method for transmission of a multicast service according to an embodiment of this application;
FIG. 5 is a schematic flowchart of another method for transmission of a multicast service according to an embodiment of this application;
FIG. 6 is a schematic block diagram of an apparatus for transmission of a multicast service according to an embodiment of this application; and
FIG. 7 is a schematic block diagram of another apparatus for transmission of a multicast service according to an embodiment of this application.

### DESCRIPTION OF EMBODIMENTS

The technical solutions in this application are described in the following with reference to the accompanying drawings.

In embodiments of this application, terms such as "first" and "second" are used to distinguish same or similar items with a basically same function and role. For example, a first value and a second value are merely used to distinguish different values, and are not intended to limit a sequence thereof. A person skilled in the art may understand that the terms "first", "second", and the like do not limit a quantity and an execution order, and the terms "first", "second", and the like do not indicate a definite difference.

It should be noted that, in embodiments of this application, terms such as "illustrative" and "for example" are used for presenting an example, an instance, or an illustration. Any embodiment or design scheme described as "illustrative" or "for example" in this application should not be explained as being more preferred or having more advantages than another embodiment or design scheme. Exactly, use of the term such as "illustrative" or "for example" is intended to present a related concept in a specific manner.

In embodiments of this application, "at least one" means one or more, and "a plurality of" means two or more. "And/or" describes an association relationship between associated objects and indicates that three relationships may exist. For example, A and/or B may indicate the following three cases: only A exists, both A and B exist, and only B exists, where A and B may be singular or plural. The character "/" generally indicates an "or" relationship between associated objects. "At least one (item) of the following" or a similar expression thereof means any combination of these items, including a single item or any combination of a plurality of items. For example, at least one (item) of a, b, or c may represent: a, b, c, a and b, a and c, b and c, or a, b, and c, where a, b, and c may be singular or plural.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR), and a future evolved communication system, for example, a 6th generation (6th generation, 6G) system.

It should be further understood that the technical solutions in embodiments of this application may further be applied to various communication systems based on a non-orthogonal multiple access technology, for example, a sparse code multiple access (sparse code multiple access, SCMA) system. Certainly, the SCMA may also be referred to by other names in the communication field. Further, the technical solutions in embodiments of this application may be applied to a multi-carrier transmission system using a non-orthogonal multiple access technology, for example, a non-orthogonal multiple access technology orthogonal frequency division multiplexing (orthogonal frequency division multiplexing, OFDM), filter bank multi-carrier (filter bank multi-carrier, FBMC), generalized frequency division multiplexing (generalized frequency division multiplexing, GFDM), or filtered-OFDM (filtered-OFDM, F-OFDM) system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a mobile station, a remote station, a remote terminal, a mobile device, a user terminal, a terminal, a wireless communication device, a user agent, a user apparatus, or the like.

The terminal device may be a device providing speech/data connectivity to a user, for example, may be a handheld device or an in-vehicle device having a wireless connection function. Currently, some examples of the terminal device include: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, a terminal device in a 5G network, a terminal device in a future evolved public land mobile network (public land mobile network, PLMN), or the like. This is not limited in embodiments of this application.

As an example rather than a limitation, in this application, the terminal device may be a terminal device in an Internet of Things (internet of things, IoT) system. Internet of Things is an important component in future development of information technologies, and a main technical feature thereof is connecting a thing to a network by using a communication technology, to implement an intelligent network of human-machine interconnection and interconnection between things. As an example rather than a limitation, the terminal device in embodiments of this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated with clothes or an accessory of a user. The wearable device is more than a hardware device, and can even achieve a powerful function through software support, data interaction, and cloud interaction. Generalized wearable intelligent devices include full-function and large-size devices that can implement all or some functions without depending on smartphones, for example, smart watches or smart glasses, and devices that focus on only one type of application function and need to work with other devices such as smartphones, such as various smart bands or smart jewelry for monitoring physical signs.

As an example rather than a limitation, in embodiments of this application, the terminal device may further be a terminal device in machine type communication (machine type communication, MTC). In addition, the terminal device may further be an in-vehicle module, an in-vehicle assembly, an in-vehicle component, an in-vehicle chip, an in-vehicle unit, or the like that is built into a vehicle as one or more components or units. A vehicle may perform the method provided in this application by using the built-in in-vehicle module, in-vehicle assembly, in-vehicle component, in-vehicle chip, in-vehicle unit, or the like. Therefore, embodiments of this application may also be applied to Internet of Vehicles, for example, vehicle to everything (vehicle to everything, V2X), long term evolution-vehicle (long term evolution-vehicle, LTE-V), or a vehicle-to-vehicle (vehicle-to-vehicle, V2V) technology.

In addition, in embodiments of this application, the terminal device may alternatively be a terminal device in an Internet of Things (Internet of things, IoT) system. IoT is an important part in future development of information technologies, and is mainly technically characterized in connecting things to networks by using communication technologies, to achieve intelligent networks of human-machine interconnection and interconnection between things.

The network device involved in this application may be a device communicating with the terminal device. The network device may also be referred to as an access network device or a wireless access network device. The network device may be a transmission reception point (transmission reception point, TRP), or may be an evolved NodeB (evolved NodeB, eNB or eNodeB) in an LTE system, or may be a home NodeB (for example, home evolved NodeB, or home Node B, HNB) or a base band unit (base band unit, BBU), or may be a radio controller in a cloud radio access network (cloud radio access network, CRAN) scenario. Alternatively, the network device may be a relay station, an access point, an in-vehicle device, a wearable device, a network device in a 5G network, a network device in a future evolved PLMN network, or the like, or may be an access point (access point, AP) in a WLAN, or may be a gNB in an NR system. The foregoing network device may further be a metro base station, a micro base station, a pico base station, a femto base station, or the like. This is not limited in this application.

In a network structure, the network device may include a centralized unit (centralized unit, CU) node, a distributed unit (distributed unit, DU) node, or a RAN device including a CU node and a DU node, or a RAN device including a control plane CU node (CU-CP node), a user plane CU node (CU-UP node), and a DU node.

The network device provides a service to a cell. The terminal device communicates with the cell by using a transmission resource (for example, a frequency domain resource, or a spectrum resource) allocated by the network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), or the like. These small cells are characterized by a small coverage area and low transmit power, and are suitable for providing high-speed data transmission services.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems for implementing service processing through a process (process), for example, a Linux operating system, a Unix operating system, an Android operating system, an iOS operating system, or a Windows operating system. The application layer includes applications such as a browser, an address book, text processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include, but is not limited to: a magnetic storage component (for example, a hard disk, a floppy disk, or a magnetic tape), an optical disc (for example, a compact disc (compact disc, CD), or a digital versatile disc (digital versatile disc, DVD)), a smart card, and a flash storage component (for example, an erasable programmable read-only memory (erasable programmable read-only memory, EPROM), a card, a stick, or a key drive). In addition, various storage media described in this specification may indicate one or more devices and/or other machine-readable media configured to store information. The term "machine-readable media" may include but is not limited to a radio channel and various other media that can store, contain, and/or carry instructions and/or data.

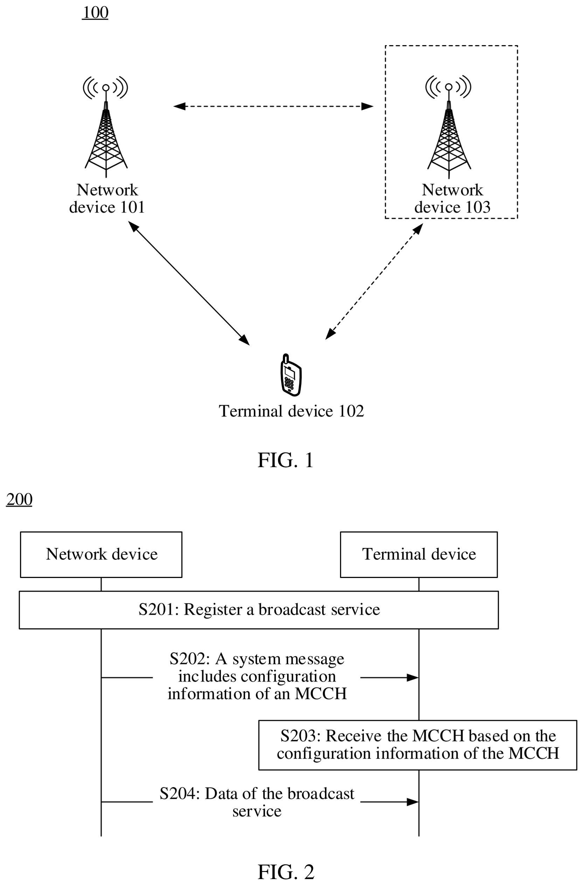

To facilitate understanding of embodiments of this application, a communication system applicable to embodiments of this application is first described in detail with reference to FIG. 1.

FIG. 1 shows a communication system 100 to which embodiments of this application are applied. The communication system 100 includes at least one network device 101. The network device 101 is a device that can communicate with a terminal device, for example, a base station or a base station controller. Each network device may provide communication coverage for a specific geographical region, and may communicate with a terminal device located in the coverage region (a cell). The communication system 100 further includes a terminal device 102 located in a coverage range of the network device 101, and may provide a broadcast and multicast service to the terminal device 102 through communication between the network device 101 and the terminal device 102. The terminal device 102 may be mobile.

Optionally, the communication system 100 may further include a network device 103. The network device 103 is a network device neighboring to the network device 101. When the terminal device 102 moves out of the coverage range of the network device 101 and enters a coverage range of the network device 103, a broadcast and multicast service may be provided for the terminal device 102 through communication between the network device 101 and the network device 103 and communication between the network device 103 and the terminal device 102.

Optionally, the communication system 100 may include a plurality of network devices and a coverage range of each network device may include another quantity of terminal devices. This is not limited in embodiments of this application.

A plurality of antennas may be configured for the foregoing communication devices, for example, the network device 101, the network device 103, or the terminal device 102 in FIG. 1. The plurality of antennas may include at least one transmit antenna configured to send a signal and at least one receive antenna configured to receive a signal. In addition, each communication device further additionally includes a transmitter chain and a receiver chain, and a person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal device by using a multi-antenna technology.

Optionally, the communication system 100 may further include other network entities such as a network controller and a mobility management entity. This is not limited in embodiments of this application.

For ease of understanding, related terms in embodiments of this application are first described below.

### 1. Radio resource control (radio resource control, RRC) status:

There are three types of RRC statuses between a terminal device and a network device: an RRC connected state (RRC_CONNECTED state), an RRC idle state (RRC_IDLE state), and an inactive state (RRC_INACTIVE state).

RRC connected state (which may also be referred to as a connected state for short): The terminal device establishes an RRC connection to a network, and may perform data transmission.

RRC idle state (which may also be referred to as an idle state for short): The terminal device does not establish the RRC connection to the network, and a base station does not store a context of the terminal device. If the terminal device needs to enter the RRC connected state from the RRC idle state, the terminal device needs to initiate an RRC connection establishment process.

RRC inactive state (which may also be briefly referred to as an inactive state, an inactive state, an inactive state, an inactive state, or an RRC inactive state): The terminal device previously enters the RRC connected state, and then the network device releases the RRC connection, but the network device stores the context of the terminal device. If the terminal device needs to enter the RRC connected state again from the RRC inactive state, the terminal device needs to initiate an RRC recovery process (or referred to as an RRC connection recovery process). Compared with the RRC establishment process, the RRC recovery process has a shorter delay and smaller signaling overheads. However, the network device needs to store the context of the terminal device, which occupies storage overheads of the network device.

### 2. Broadcast transmission mode

For ease of understanding, a method for transmission of a broadcast service is described below with reference to FIG. 2. FIG. 2 is a schematic flowchart of a method 200 for transmission of a broadcast service. As shown in FIG. 2, the method 200 for transmission of a broadcast service includes the following steps:
S201: A terminal device registers a broadcast service through interaction with a network device.

Specifically, the terminal device may interact with the network device (for example, a broadcast management network element of a core network), to indicate that the terminal device is interested in some broadcast services. Optionally, the network device may determine whether the terminal device has permission to receive the broadcast service. For example, the network device may determine whether the terminal device pays, and determine, in a case of payment, that the terminal device has the permission to receive the broadcast service.

S202: The network device broadcasts configuration information of a multicast control channel (multicast control channel, MCCH) by using a system message, the configuration information of the MCCH including a time-frequency resource used by the MCCH, a transmission period of the MCCH, and the like. Correspondingly, the terminal device receives the system message and obtains the configuration information of the MCCH.

For example, the system message may be a system information block (system information block, SIB), for example, SIB20.

S203: The terminal device receives the MCCH based on the configuration information of the MCCH.

Specifically, the terminal device may decode a physical downlink control channel (physical downlink control channel, PDCCH) of the MCCH by using a radio network temporary identifier (radio network temporary identifier, RNTI) on the time-frequency resource of an MCCH time domain. If decoding succeeds, information included in the PDCCH may include the following three types of content:
(1) Scheduling information of a physical downlink shared channel (physical downlink shared channel, PDSCH) of the MCCH: A modem manner of the PDSCH, a time-frequency resource of the PDSCH, and the like are included, so that the terminal device receives configuration content in the MCCH.
(2) Activation indication (or referred to as a start indication) of the broadcast service: It is used to indicate that a new broadcast service is about to be activated. If a broadcast service of a terminal device is not activated currently, and the terminal device receives the indication, the terminal device needs to receive a subsequent PDSCH of the MCCH. Conversely, if there is no indication, it indicates that the broadcast service of the terminal device is not activated yet, and the terminal may decode the current PDCCH without decoding the PDSCH, so that a power saving effect can be achieved.
(3) Configuration update indication of the broadcast service: It is used to indicate that a configuration of the broadcast service sent on the MCCH is updated. The indication is mainly for a terminal device that currently starts to receive the broadcast service. Such a terminal device has the configuration of the broadcast service, and is receiving the service. If the indication is received, it indicates that the configuration of the broadcast service may be changed, and the terminal device further needs to receive the subsequent PDSCH of the MCCH. Conversely, if there is no indication, it indicates that the configuration of the current broadcast service is not changed, and the terminal device may continue to receive the broadcast service by using the previous configuration without receiving the PDSCH of the MCCH, so that the power saving effect can be achieved.

In a possible implementation, if the terminal device needs to receive the PDSCH (mainly a new service is activated, or the terminal device already receives the broadcast service but the PDCCH indicates that the configuration of the broadcast service may be changed) of the MCCH, the terminal device may decode the PDSCH of the MCCH based on the scheduling information of the PDCCH of the MCCH obtained in S203. Information included in the PDSCH is mainly a configuration of a multicast traffic channel (multicast traffic channel, MTCH). The configuration of the MTCH may include an identifier of the broadcast service, for example, an identity (identity, ID), a group RNTI (group RNTI, G-RNTI) used to receive the broadcast service, and time-frequency resource information of the MTCH corresponding to the broadcast service.

S204: The terminal device monitors scheduling information of a PDCCH of an MTCH based on configuration content in the MCCH by using a G-RNTI, and monitors a PDSCH of the MTCH based on the scheduling information of the PDCCH of the MTCH, to obtain data of the broadcast service.

In the foregoing steps S202 to S204, the RRC status of the terminal device is not limited. That is, the terminal device may be in the RRC connected state in which the terminal device receives a unicast service, or may be in the RRC idle state or the RRC inactive state in which the terminal device does not have the unicast service. In other words, the terminal device operating in any of the foregoing radio resource control (RRC) states may receive the broadcast service because the network device sends the broadcast service in the cell and does not need to sense existence of the terminal device. In a broadcast mode, the network device sends the broadcast service within the coverage range of the network device, and the terminal device operating in any state may receive the broadcast service as needed.

### 3. Multicast transmission mode

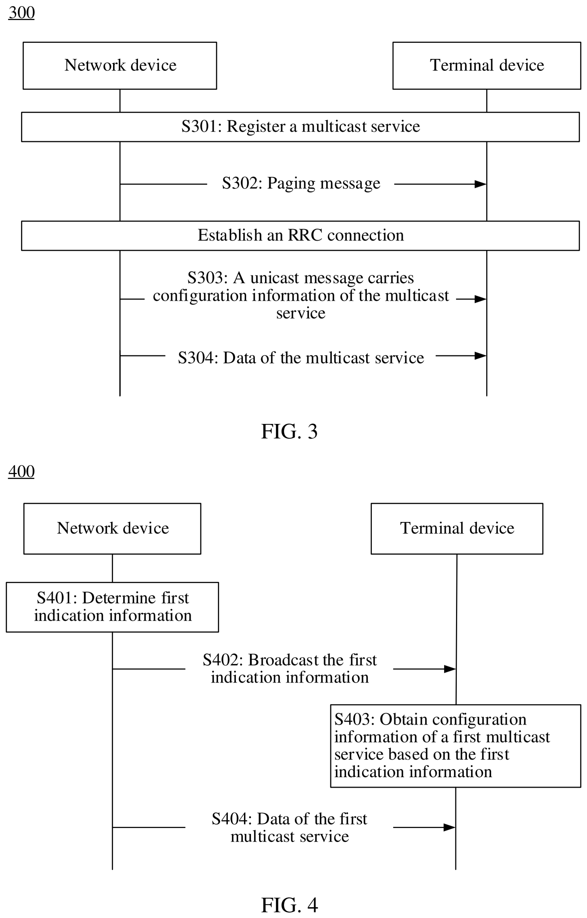

The following describes a method for transmission of a multicast service with reference to FIG. 3. FIG. 3 is a schematic flowchart of a method 300 for transmission of a multicast service. As shown in FIG. 3, the method 300 for transmission of a multicast service includes the following steps:
S301: A terminal device registers a multicast service through interaction with a network device.

Specifically, the terminal device may interact with the network device (for example, a multicast management network element of a core network), to indicate that the terminal device is interested in some multicast services. Optionally, the network device may determine whether the terminal device has permission to receive the multicast service. Similar to the foregoing S201, the network device may determine, when the terminal device determines that the terminal device has paid, that the terminal device has the permission to receive the multicast service.

S302: The network device sends a paging message to page a terminal device corresponding to a to-be-activated multicast service. Correspondingly, the terminal device receives the paging message.

Specifically, when a multicast service is about to be activated, the network device wakes up the corresponding terminal device by sending a particular paging message within a coverage range of the network device. Optionally, the paging message sent by the network device may carry a temporary mobile group identity (temporary mobile group identity, TMGI) of the to-be-activated multicast service or an ID of the multicast service.

In a possible implementation, after receiving the paging message, if the terminal device is interested in the multicast service, the terminal device initiates an RRC connection establishment procedure, and enters an RRC connected state.

S303: The network device sends a unicast message to the terminal device, the unicast message carrying configuration information for receiving the multicast service. Correspondingly, the terminal device receives the unicast message.

In the RRC connected state, the network device may send a configuration by using the unicast message. For example, the network device may send an RRC reconfiguration (RRC Reconfiguration) message to the terminal device, and send, to the terminal device, the configuration information for receiving the multicast service.

In a possible implementation, if configuration update needs to performed on a multicast service in which the terminal device is interested, the network device may send the unicast message again, and send configuration update information of the corresponding multicast service to the terminal device. Optionally, the configuration update information may include a configuration of an MTCH of the multicast service, for example, an ID of the multicast service (or the TMGI of the multicast service), a G-RNTI used to receive the multicast service, and time-frequency resource information of the MTCH corresponding to the multicast service.

S304: The terminal device receives data of the multicast service based on the configuration information of the multicast service in the unicast message.

Specifically, the terminal device may monitor PDCCH scheduling information of the MTCH based on the configuration of the MTCH of the multicast service in the configuration information of the multicast service by using the G-RNTI in the configuration of the MTCH of the multicast service, and monitor a PDSCH of the MTCH based on the scheduling information, to obtain the data of the multicast service.

Step S303 and step S304 above are mainly for the terminal device in the RRC connected state. Because multicast is essentially that the network device performs group scheduling on a plurality of terminal devices that intend to receive a same service, the network device needs to sense existence of a terminal, perform same configuration for a same group of terminal devices, and then perform multicast transmission.

The following describes, with reference to Table 1, a configuration sending manner, a service start notification manner, and a configuration update notification manner that correspond to the foregoing method for transmission of a broadcast service and method for transmission of a multicast service. Table 1 shows the configuration sending manner, the service start notification manner, and the configuration update notification manner that correspond to the foregoing two different transmission modes.

**Table 1**

| | Broadcast transmission mode | Multicast transmission mode |
|---|---|---|
| Service notification manner | Activation of a new service is indicated by using a bit field in downlink control information (downlink control information, DCI) of an MCCH. For example, 1 bit in the DCI of the MCCH indicates the activation of the new service, and a terminal device reads the MCCH, to obtain a related configuration | A network device sends a paging message. For example, the paging message of the network device carries a TMGI, to notify that a related multicast service is about to be activated. A terminal device enters an RRC connected state, and prepares to receive configuration information of the related multicast service |
| Configuration sending manner | A network device sends configuration information in a broadcast manner. For example, a terminal device may receive configuration information of a broadcast service through a PDSCH of an MCCH | A network device sends configuration information in a unicast manner, for example, a terminal device in an RRC connected state. Configuration information of a multicast service is received by receiving RRC Reconfiguration |
| Configuration update manner | A configuration update is sent through DCI of an MCCH. For example, 1 bit in the DCI of the MCCH indicates configuration update of an existing broadcast service | Configuration update information of a multicast service is updated at any time by using RRC Reconfiguration |

In conclusion, the method for transmission of a multicast service supports only the terminal device in the RRC connected state. It is considered that although there is no unicast service requirement for some terminal devices in the RRC inactive state, the terminal devices in the RRC inactive state probably also need to receive the multicast service. Because there is no unicast connection, how to send related information of the multicast service to the terminal devices in the RRC inactive state, so that the terminal devices in the RRC inactive state can also receive the multicast service is a problem to be urgently resolved.

In view of this, an embodiment of this application provides a method for transmission of a multicast service. In a broadcast manner, a terminal device may obtain indication information for activation or configuration update of an RRC inactive multicast service, further obtain configuration information of the multicast service based on the indication information, and further receive data of the multicast service. According to the method in this embodiment of this application, activation or configuration update of the multicast service may be performed on the terminal device in the radio resource control (RRC) inactive state, thereby meeting a requirement that the terminal device in the RRC inactive state receives the multicast service, and improving user experience.

The following describes in detail a method for transmission of a multicast service according to an embodiment of this application with reference to FIG. 4.

FIG. 4 is a schematic flowchart of a method 400 for transmission of a multicast service according to this application. The method 400 may be applied to the communication system shown in FIG. 1. However, this is not limited in embodiments of this application. As shown in FIG. 4, the method 400 may include the following steps:
S401: A network device determines a first indication message, the first indication information being used to indicate activation or configuration update of a first multicast service.
S402: The network device broadcasts the first indication information, and correspondingly, a terminal device receives the first indication information, and the terminal device is in a radio resource control (RRC) inactive state.
S403: The terminal device obtains configuration information of the first multicast service based on the first indication information.
S404: The terminal device receives data of the first multicast service based on the configuration information of the first multicast service.

It should be understood that the foregoing first multicast service may be one multicast service, or may be a plurality of multicast services. A quantity of first multicast services is not limited in embodiments of this application. In a possible implementation, there is one first multicast service, and the first multicast service is a to-be-activated multicast service or a multicast service whose configuration is to be updated. In another possible implementation, there are a plurality of first multicast services, some multicast services in the plurality of first multicast services are to-be-activated multicast services, and other multicast services are tasks whose configuration is to be updated.

It should be further understood that the foregoing activation means that a new multicast service is about to start, and the foregoing configuration update means that a configuration of a multicast service that has started changes and needs to be updated.

In embodiments of this application, the network device sends the first indication information used to indicate activation or configuration update of the first multicast service in a broadcast form, so that the terminal device in the RRC inactive state can receive the first indication information, obtain the configuration information of the first multicast service based on the first indication information, and further receive the data of the first multicast service. According to the method provided in embodiments of this application, activation or configuration update of the multicast service may be performed for the terminal device in the radio resource control (RRC) inactive state. In other words, even if the terminal device does not have a unicast connection, the terminal device may also receive an activation or configuration update notification of the multicast service from the network device, thereby meeting a requirement that the terminal device in the RRC inactive state receives the multicast service, and improving user experience.

In an optional embodiment, the first indication information includes at least one of the following:

### (1) Identifier of the first multicast service.

It should be understood that the identifier of the first multicast service is used to uniquely identify the first multicast service. For example, the identifier of the first multicast service may be an ID of the first multicast service or a TMGI of the first multicast service.

### (2) Configuration identifier of the first multicast service.

It should be understood that the configuration identifier of the first multicast service is used to uniquely identify a configuration of the first multicast service. Because the network device may configure first multicast services for a plurality of groups of terminal devices, configurations of first multicast services for different groups of terminal devices may be different, and therefore need to be distinguished by using configuration identifiers. In the foregoing plurality of groups of terminal devices, configurations of first multicast services of some terminal devices may be changed, and configurations of first multicast services of other terminal devices are not changed.

(3) Configuration update manner of the first multicast service. The configuration update manner is a first update manner or a second update manner, the first update manner is performing configuration update by using a multicast control channel (MCCH), and the second update manner is reestablishing an RRC connection and performing configuration update by using a unicast manner.

It should be understood that in addition to the foregoing first update manner and second update manner, the configuration update manner may further be another manner. This is not limited in embodiments of this application.

(4) Configuration information of the MCCH applied to an RRC inactive multicast service.

The configuration information of the MCCH applied to the RRC inactive multicast service may specifically include a time-frequency resource used by the MCCH, a transmission period of the MCCH, an RNTI for decoding DCI in the MCCH, and the like.

In a possible implementation, the network device may carry the foregoing information in (1) to (4) when a capacity of a message corresponding to the first indication information is rich, to explicitly indicate the terminal device, to improve processing efficiency of the terminal device, thereby improving subsequent transmission efficiency of the multicast service.

In an optional embodiment, the first indication information includes the identifier of the first multicast service and/or the configuration identifier of the first multicast service. A possible implementation of the foregoing S403 includes: obtaining, by the terminal device, the configuration information of the first multicast service if an identifier of a multicast service added by the terminal device is included in the first indication information; and/or obtaining, by the terminal device, the configuration information of the first multicast service if a configuration identifier of a multicast service added by the terminal device is included in the first indication information.

It should be understood that, before the terminal device receives the first indication information, the terminal device has completed registration for the multicast service in which the terminal device is interested through interaction with the network device, and the multicast service added by the terminal device is the multicast service in which the terminal device is interested and for which registration has been completed.

When the first indication information includes the identifier of the first multicast service, the terminal device may directly determine, based on the identifier, which multicast service is about to start or whose configuration is to be updated. If a multicast service is the multicast service in which the terminal device is interested or having started to be received, the terminal device obtains the configuration information of the first multicast service. If a multicast service is not the multicast service in which the terminal device is interested or having started to be received, the terminal device may not perform any processing. In this way, processing efficiency of the terminal device may be improved, and another terminal device that does not need to update the first multicast service is prevented from obtaining the configuration information of the first multicast service, avoiding wasting power consumption.

When the first indication information includes the configuration identifier of the first multicast service, the terminal device may directly determine, based on the configuration identifier, a multicast service corresponding to which configuration is about to start or has configuration update to be performed. If the configuration is a configuration in which the terminal device is interested or a configuration of the multicast service having started to be received, the terminal device obtains the configuration information of the first multicast service. If the configuration is not a configuration in which the terminal device is interested or a configuration of the multicast service having started to be received, the terminal device may not perform any processing. In this way, processing efficiency of the terminal device may be improved, and another terminal device that does not need to update the configuration of the first multicast service is prevented from obtaining the configuration information of the first multicast service, avoiding wasting power consumption.

In an optional embodiment, the first indication information includes the configuration update manner of the first multicast service. Another possible implementation of the foregoing S403 includes: obtaining, by the terminal device, the configuration information of the first multicast service based on the first update manner or the second update manner.

The first update manner is performing configuration update by using the multicast control channel (MCCH). An implementation thereof is the same as S203 in FIG. 2, and details are not described herein again.

The second update manner is reestablishing an RRC connection and performing configuration update in a unicast manner. An implementation thereof is the same as S303 in FIG. 3, and details are not described herein again.

Because a configuration of a multicast service or a multicast service aims at a particular group of terminal devices, the network device may use different configuration update manners based on a quantity of terminal devices in the group. In this way, use efficiency of network resources needed for configuration update can be improved, and impact on a terminal device that does not need configuration update can be reduced as much as possible.

In a possible implementation, if there are a large quantity (greater than or equal to a first preset value) of terminal devices needing to perform configuration update, the network device may configure the first update manner for the terminal device, and the terminal device performs configuration update by using the first update manner, that is, the MCCH. Because the MCCH is a common control channel, when the network device sends one piece of updated configuration information, all terminal devices needing to perform configuration update receive the new configuration information. In this way, the use efficiency of network resources needed for configuration update can be improved.

In another possible implementation, if there are a small quantity (less than or equal to a second preset value) of terminal devices needing to perform configuration update, the network device may configure the second update manner for the terminal device, and the terminal device performs configuration update by using the second update manner, that is, a unicast manner, to avoid that the network device increases a probability that another terminal device reads the MCCH or a data volume of reading the MCCH, to notify the small quantity of terminal devices, thereby reducing impact on terminal devices that do not need to perform configuration update on the first multicast service.

It should be understood that in addition to the foregoing first update manner and second update manner, the configuration update manner provided in embodiments of this application may further be another manner. This is not limited in embodiments of this application.

It should be further understood that, when the first indication information indicates the configuration update manner, the terminal device may obtain the configuration information of the first multicast service based on the configuration update manner indicated in the first indication information. When the first indication information does not indicate the configuration update manner, the terminal device may obtain the configuration information of the first multicast service in any manner. This is not limited in embodiments of this application.

In an optional embodiment, the first indication information is carried in any one of the following: a system message; downlink control information (DCI) of the MCCH; or a paging message.

It should be understood that the system message may be a SIB, for example, SIB20 or another system message. This is not specifically limited in this application.

In a possible implementation, the first indication information is carried in first DCI of an MCCH applied to a broadcast service, and the first DCI includes at least one of the following: a bit field used to indicate activation of a conventional broadcast new service; a bit field used to indicate configuration update of a conventional broadcast service; a bit field used to indicate activation of the RRC inactive multicast service; or a bit field used to indicate configuration update of the RRC inactive multicast service.

In embodiments of this application, the first indication information is carried in the first DCI of the MCCH of the conventional broadcast service. That is, the RRC inactive multicast service and the broadcast service share an MCCH. In this case, the terminal device may decode the first DCI by using the RNTI of the first DCI, to obtain the first indication information included in the first DCI. The first DCI not only includes a bit field for indicating activation and/or configuration update of a conventional broadcast new service, but also includes a bit field for indicating activation and/or configuration update of a multicast service in the inactive state.

According to the method provided in embodiments of this application, in a manner in which the conventional broadcast service and the RRC inactive multicast service share the MCCH, the terminal device in the RRC inactive state may select, based on the received first indication information, a conventional broadcast service or a multicast service in which the terminal device is interested, to perform corresponding service activation or configuration update, thereby not only implementing reception of the multicast service by the terminal device in the RRC inactive state, but also saving channel resources of the MCCH.

In another possible implementation, the first indication information is carried in second DCI of the MCCH applied to the RRC inactive multicast service, and an RNTI used to decode the second DCI is different from an RNTI used to decode first DCI of an MCCH applied to a broadcast service.

It should be understood that "the RNTI used to decode the DCI" may also be referred to as "the RNTI of the DCI", "the RNTI associated with the DCI", and the like, and they have a same concept and can be interchanged.

In embodiments of this application, the first indication information is carried in the second DCI of the MCCH applied to the RRC inactive multicast service. That is, the RRC inactive multicast service and the broadcast service respectively correspond to different MCCHs. In this case, the terminal device may decode the first DCI by using the RNTI of the first DCI, and decode the second DCI by using the RNTI of the second DCI.

In embodiments of this application, the MCCH applied to the RRC inactive multicast service is introduced, and the first indication information is carried by using the second DCI of the MCCH. The terminal device may select, based on the received first indication information, the multicast service in which the terminal device is interested, and perform corresponding service activation or configuration update. Because the first indication information is carried in the second DCI of the MCCH applied to the RRC inactive multicast service, and activation or configuration update information of the broadcast service is carried in the first DCI of the MCCH applied to the broadcast service, it can be avoided that the terminal device corresponding to the broadcast service unnecessarily periodically reads the MCCH due to activation or a configuration change of the multicast service, thereby reducing power consumption of the terminal device.

In an optional embodiment, the second DCI includes: a bit field used to indicate activation of the RRC inactive multicast service; and/or a bit field used to indicate configuration update of the RRC inactive multicast service.

In an optional embodiment, the network device sends the configuration information of the MCCH applied to the RRC inactive multicast service, and correspondingly, the terminal device receives the configuration information of the MCCH applied to the RRC inactive multicast service and obtains the second DCI based on the configuration information of the MCCH applied to the RRC inactive multicast service.

In a possible implementation, the network device may send, by using a system message or unicast signaling when an RCC connection between the terminal device and the network device is released, the configuration information of the MCCH applied to the RRC inactive multicast service. Correspondingly, the terminal device receives the configuration information of the MCCH applied to the RRC inactive multicast service.

For example, the configuration information of the MCCH applied to the RRC inactive multicast service may include: a time-frequency resource of the MCCH applied to the RRC inactive multicast service, a transmission period of the MCCH applied to the RRC inactive multicast service, the RNTI used to decode the second DCI, and the like.

It should be understood that, the RNTI used to decode the second DCI may be configured by the network device for the terminal device, or may be agreed on in a protocol. This is not specifically limited in embodiments of this application.

In still another possible implementation, the first indication information is carried in the paging message. The first indication information further includes an identifier of the terminal device that is to activate the first multicast service or update a configuration of the first multicast service.

It should be understood that the network device may find a target terminal device by using the paging message, and the paging message needs to carry an identifier of the target terminal device. The target terminal device herein is a terminal device that is to activate the first multicast service or update a configuration of the first multicast service.

It should be further understood that the terminal device may be movable. When the target terminal device paged by the network device is out of a coverage range of the target terminal device, the network device sends a group paging message including second indication information to another network device, to page the target terminal device. The second indication information is used to indicate paging the terminal device that is to activate the first multicast service or update the configuration of the first multicast service.

Optionally, the second indication information includes at least one of the following: an identifier of the terminal device; an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

It should be understood that the second indication information may be the same as or different from the foregoing first indication information. This is not limited in embodiments of this application. In a possible implementation, content in the second indication information may be less than content in the first indication information. For example, as shown in FIG. 1, the configuration identifier of the first multicast service supported by the network device 101 includes 1, 2, and 3, but the configuration identifier of the first multicast service supported by the network device 103 includes 1 and 3. When sending the second indication information to the network device 103, the network device 101 may only send the configuration identifiers 1 and 3 of the first multicast service supported by the network device 103.

In embodiments of this application, the network device may send the first indication information to the corresponding terminal device in a paging manner, to perform activation or configuration update of the multicast service for the terminal device in the radio resource control (RRC) inactive state, and prevent the terminal device from periodically reading the DCI of the MCCH, thereby reducing power consumption of the terminal device.

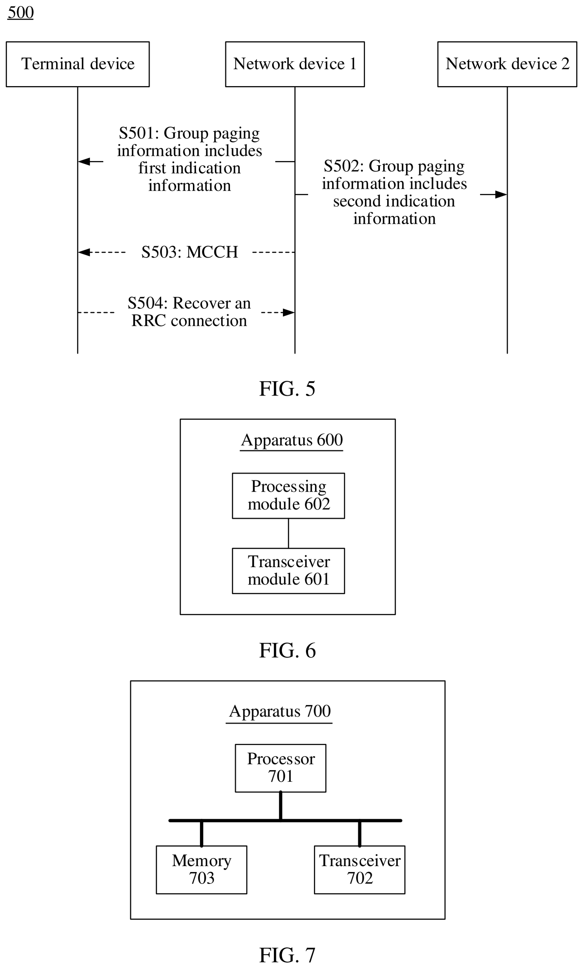

It is considered that the multicast service may be sent in a range of a plurality of cells and the terminal device has mobility, a method for configuring a multicast service through inter-cell coordination may be considered. For example, FIG. 5 shows a method 500 for configuring a multicast service through inter-cell coordination. As shown in FIG. 5, the method includes the following steps:
S501: A network device 1 sends a group paging message, where the group paging message includes the foregoing first indication information, to notify a terminal device in a coverage range of the network device that activation and configuration update needs to be performed on a first multicast service.
S502: The network device 1 sends a group paging message to a neighboring network device 2 by using an interface (for example, an Xn interface) between the network devices, where the group paging message includes the foregoing second indication information.

If the terminal device is in a coverage range of the network device 1, the terminal device is paged by the network device 1. The terminal device is in an RRC inactive state. After receiving the first indication information, the terminal device may obtain configuration information of the first multicast service or perform configuration update.

In a possible implementation, S503 is performed. The terminal device performs configuration update by reading an MCCH, that is, the foregoing first update manner.

In another possible implementation, S504 is performed. The terminal device sends an RRC connection recovery request to the network device 1, reestablishes an RRC connection, and performs configuration update in a unicast manner.

It should be understood that, if the terminal device is in a coverage range of the network device 2, the terminal device is paged by the network device 2, and subsequently, the terminal device may obtain the configuration information of the first multicast service by using the network device 2. Details are not described herein again.

It should be understood that sequence numbers of the foregoing processes do not mean execution sequences. The execution sequences of the processes should be determined based on functions and internal logic of the processes, and should not be construed as any limitation on the implementation processes of embodiments of this application.

The methods in embodiments of this application are described in detail with reference to FIG. 1 to FIG. 5 above, and apparatuses in embodiments of this application are to be described in detail with reference to FIG. 6 and FIG. 7.

FIG. 6 shows an apparatus 600 for transmission of a multicast service according to an embodiment of this application. The apparatus 600 includes: a transceiver module 601 and a processing module 602.

In a possible implementation, the apparatus 600 is configured to perform the processes and steps corresponding to the terminal device in the foregoing method embodiments.

The transceiver module 601 is configured to: receive first indication information broadcast by a network device, the first indication information being used to indicate activation or configuration update of a first multicast service, and the apparatus being in a radio resource control (RRC) inactive state; the processing module 602 is configured to: obtain configuration information of the first multicast service based on the first indication information; and the transceiver module 601 is further configured to: receive data of the first multicast service based on the configuration information of the first multicast service.

Optionally, the first indication information includes at least one of the following: an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

Optionally, the first indication information includes the identifier of the first multicast service and/or the configuration identifier of the first multicast service; and the processing module 602 is specifically configured to: obtain the configuration information of the first multicast service if an identifier of a multicast service added by the apparatus is included in the first indication information; and/or obtain the configuration information of the first multicast service if a configuration identifier of a multicast service added by the apparatus is included in the first indication information.

Optionally, the first indication information includes a configuration update manner of the first multicast service; and the processing module 602 is specifically configured to: obtain the configuration information of the first multicast service based on the first update manner or the second update manner.

Optionally, the first indication information is carried in any one of the following: a system message; downlink control information (DCI) of the MCCH; or a paging message.

Optionally, the first indication information is carried in first DCI of an MCCH applied to a broadcast service, and the first DCI includes at least one of the following: a bit field used to indicate activation of a conventional broadcast new service; a bit field used to indicate configuration update of a conventional broadcast service; a bit field used to indicate activation of the RRC inactive multicast service; or a bit field used to indicate configuration update of the RRC inactive multicast service.

Optionally, the first indication information is carried in second DCI of the MCCH applied to the RRC inactive multicast service, and an RNTI used to decode the second DCI is different from an RNTI used to decode first DCI of an MCCH applied to a broadcast service.

Optionally, the transceiver module 601 is further configured to: obtain the configuration information of the MCCH applied to the RRC inactive multicast service; and obtain the second DCI based on the configuration information of the MCCH applied to the RRC inactive multicast service.

Optionally, the transceiver module 601 is specifically configured to: obtain, by using a system message broadcast by the network device or by using unicast signaling when an RCC connection between the apparatus and the network device is released, the configuration information of the MCCH applied to the RRC inactive multicast service.

Optionally, the second DCI includes: a bit field used to indicate activation of the RRC inactive multicast service; and/or a bit field used to indicate configuration update of the RRC inactive multicast service.

Optionally, the first indication information is carried in the paging message; and the first indication information further includes an identifier of the apparatus that is to activate the first multicast service or update the configuration of the first multicast service.

In another possible implementation, the apparatus 600 is configured to perform the processes and steps corresponding to the network device in the foregoing method embodiments.

The processing module 602 is configured to: determine first indication information, the first indication information being used to indicate activation or configuration update of a first multicast service; and the transceiver module 601 is configured to: broadcast the first indication information.

Optionally, the first indication information includes at least one of the following: an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

Optionally, the first indication information is carried in any one of the following: a system message; downlink control information (DCI) of the MCCH; or a paging message.

Optionally, the first indication information is carried in first DCI of an MCCH applied to a broadcast service, and the first DCI includes at least one of the following: a bit field used to indicate activation of a conventional broadcast new service; a bit field used to indicate configuration update of a conventional broadcast service; a bit field used to indicate activation of the RRC inactive multicast service; or a bit field used to indicate configuration update of the RRC inactive multicast service.

Optionally, the first indication information is carried in second DCI of the MCCH applied to the RRC inactive multicast service, and an RNTI used to decode the second DCI is different from an RNTI used to decode first DCI of an MCCH applied to a broadcast service.

Optionally, the transceiver module 601 is further configured to: send the configuration information of the MCCH applied to the RRC inactive multicast service.

Optionally, the transceiver module 601 is specifically configured to: send, by using a system message or by using unicast signaling when an RCC connection between the apparatus and the network device is released, the configuration information of the MCCH applied to the RRC inactive multicast service.

Optionally, the second DCI includes: a bit field used to indicate activation of the RRC inactive multicast service; and/or a bit field used to indicate configuration update of the RRC inactive multicast service.

Optionally, the first indication information is carried in the paging message; and the first indication information further includes an identifier of the terminal device that is to activate the first multicast service or update the configuration of the first multicast service.

Optionally, the transceiver module 601 is further configured to: send second indication information to another apparatus, the second indication information being used to indicate paging a terminal device corresponding to the to-be-activated first multicast service or the to-be-updated configuration of the first multicast service.

Optionally, the second indication information includes at least one of the following: an identifier of the terminal device; an identifier of the first multicast service; a configuration identifier of the first multicast service; a configuration update manner of the first multicast service, where the configuration update manner is a first update manner or a second update manner, the first update manner is performing configuration update by using a multicast control channel (MCCH), and the second update manner is reestablishing an RRC connection and performing configuration update by using a unicast manner; or configuration information of the MCCH applied to an RRC inactive multicast service.

It should be understood that the apparatus 600 herein is presented in a form of a functional module. The term "module" herein may refer to an application-specific integrated circuit (application-specific integrated circuit, ASIC), an electronic circuit, a processor configured to execute one or more software or firmware programs (for example, a shared processor, a dedicated processor, or a group processor), a storage, a combined logic circuit, and/or any other suitable component that supports the described function. In an optional example, a person skilled in the art may understand that the apparatus 600 may be specifically the terminal device or the network device in the foregoing embodiments, and the apparatus 600 may be configured to perform each procedure and/or step corresponding to the terminal device or the network device in the foregoing method embodiments. To avoid repetition, details are not described herein again.

The apparatus 600 in the foregoing solutions have a function of implementing a corresponding step performed by the terminal device or the network device in the foregoing method. The foregoing function may be implemented by hardware, or may be implemented by hardware executing corresponding software. The hardware or the software includes one or more modules corresponding to the function. For example, the transceiver module 601 may include a sending module and a receiving module. The sending module may be configured to implement the steps and/or processes that correspond to the transceiver module and that are used to perform sending actions. The receiving module may be configured to implement the steps and/or processes that correspond to the transceiver module and that are used to perform receiving actions. The sending module may be replaced with a transmitter, and the receiving module may be replaced with a receiver, to separately perform sending and receiving operations and a related processing operation in each method embodiment.

In embodiments of this application, the apparatus 600 in FIG. 6 may alternatively be a chip or a chip system, for example, a system on chip (system on chip, SOC). Correspondingly, the transceiver module 601 may be a transceiver circuit of the chip. This is not limited herein.

FIG. 7 shows another apparatus 700 for transmission of a multicast service according to an embodiment of this application. The apparatus 700 includes a processor 701, a transceiver 702, and a storage 703. The processor 701, the transceiver 702, and the storage 703 communicate with each other through an internal connection path. The storage 703 is configured to store instructions. The processor 701 is configured to execute the instructions stored in the storage 703, to control the transceiver 702 to send a signal and/or receive a signal.

In a possible implementation, the apparatus 700 is configured to perform processes and steps corresponding to the terminal device in the foregoing method 400.

In another possible implementation, the apparatus 700 is configured to perform processes and steps corresponding to the network device in the foregoing method 400.

It should be understood that the apparatus 700 may be specifically the terminal device or the network device in the foregoing embodiments, and may be configured to perform steps and/or processes corresponding to the terminal device or the network device in the foregoing method embodiments. Optionally, the storage 703 may include a read-only memory and a random access memory, and provide instructions and data to the processor. A part of the storage may further include a nonvolatile random access memory. For example, the storage may further store device type information. The processor 701 may be configured to execute the instructions stored in the storage, and when the processor 701 executes the instructions stored in the storage, the processor 701 is configured to perform the steps and/or processes in the foregoing method embodiments corresponding to the terminal device or the network device. The transceiver 702 may include a transmitter and a receiver. The transmitter may be configured to implement the steps and/or processes that correspond to the transceiver and that are used to perform sending actions. The receiver may be configured to implement the steps and/or processes that correspond to the transceiver and that are used to perform receiving actions.

It should be understood that in embodiments of this application, the processor of the foregoing apparatus may be a central processing unit (central processing unit, CPU), and the processor may further be another general-purpose processor, a digital signal processor (DSP), an application-specific integrated circuit (ASIC), a field programmable gate array (FPGA), another programmable logic device, a discrete gate, a transistor logic device, a discrete hardware component, or the like. The general-purpose processor may be a microprocessor, any conventional processor, or the like.

During implementation, each step of the above method may be completed through an integrated logic circuit of hardware in the processor or an instruction in a form of software. Steps of the methods disclosed with reference to embodiments of this application may be directly performed by a hardware processor, or may be performed by using a combination of hardware in the processor and a software module. The software module may be in a storage medium that is mature in the art, such as a random access memory, a flash memory, a read-only memory, a programmable read-only memory, an electrically erasable programmable memory, or a register. The storage medium is located in the storage, and the processor executes the instructions in the storage and completes the steps of the foregoing method in combination with hardware of the processor. To avoid repetition, details are not described herein again.

This application further provides a computer-readable storage medium. The computer-readable storage medium is configured to store a computer program, and the computer program configured for implementing the method in the foregoing method embodiments.

This application further provides a computer program product. The computer program product includes a computer program (which may also be referred to as code or an instruction). When the computer program runs on a computer, the computer may perform the method in the foregoing method embodiments.

A person of ordinary skill in the art may be aware that, in combination with the examples described in embodiments disclosed in this specification, modules and algorithm steps may be implemented by electronic hardware or a combination of computer software and electronic hardware. Whether such functions are performed by hardware or software depends on particular applications and design constraints of the technical solutions. A person skilled in the art can a use different method for each specific application to implement a described function, but this shall not be considered as departing from the scope of this application.

It may be clearly understood by a person skilled in the art that, for convenient and brief description, for a detailed working process of the foregoing system, apparatus, and module, refer to a corresponding process in the foregoing method embodiments. Details are not described herein again.

In several embodiments provided in this application, it should be understood that, the disclosed system, apparatus, and method may be implemented in other manners. For example, the apparatus embodiment described above is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate components may or may not be physically separated, and the components displayed as modules may or may not be physical modules, that is, may be located in one place or may be distributed on a plurality of network modules. Part or all of the modules may be selected based on actual needs to achieve a purpose of a solution of embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods in embodiments of this application. However, the foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A method for transmission of a multicast service, comprising:
receiving, by a terminal device, first indication information broadcast by a network device, the first indication information being used to indicate activation or configuration update of a first multicast service, and the terminal device being in a radio resource control (RRC) inactive state;
obtaining, by the terminal device, configuration information of the first multicast service based on the first indication information; and
receiving, by the terminal device, data of the first multicast service based on the configuration information of the first multicast service.

2. The method according to claim 1, wherein the first indication information comprises at least one of the following:
an identifier of the first multicast service;
a configuration identifier of the first multicast service;
a configuration update manner of the first multicast service, wherein the configuration update manner is a first update manner or a second update manner, the first update manner is performing configuration update by using a multicast control channel (MCCH), and the second update manner is reestablishing an RRC connection and performing configuration update by using a unicast manner; or
configuration information of the MCCH applied to an RRC inactive multicast service.

3. The method according to claim 2, wherein the first indication information comprises the identifier of the first multicast service and/or the configuration identifier of the first multicast service; and
the obtaining, by the terminal device, configuration information of the first multicast service based on the first indication information comprises:
obtaining, by the terminal device, the configuration information of the first multicast service if an identifier of a multicast service added by the terminal device is comprised in the first indication information; and/or
obtaining, by the terminal device, the configuration information of the first multicast service if a configuration identifier of a multicast service added by the terminal device is comprised in the first indication information.

4. The method according to claim 2, wherein the first indication information comprises the configuration update manner of the first multicast service; and
the obtaining, by the terminal device, configuration information of the first multicast service based on the first indication information comprises:
obtaining, by the terminal device, the configuration information of the first multicast service based on the first update manner or the second update manner.

5. The method according to any one of claims 1 to 4, wherein the first indication information is carried in any one of the following:
a system message;
downlink control information (DCI) of the MCCH; or
a paging message.

6. The method according to claim 5, wherein the first indication information is carried in first DCI of an MCCH applied to a broadcast service, and the first DCI comprises at least one of the following:
a bit field used to indicate activation of a conventional broadcast new service;
a bit field used to indicate configuration update of a conventional broadcast service;
a bit field used to indicate activation of the RRC inactive multicast service; or
a bit field used to indicate configuration update of the RRC inactive multicast service.

7. The method according to claim 5, wherein the first indication information is carried in second DCI of the MCCH applied to the RRC inactive multicast service, and an RNTI used to decode the second DCI is different from an RNTI used to decode first DCI of an MCCH applied to a broadcast service.

8. The method according to claim 7, further comprising:
obtaining, by the terminal device, the configuration information of the MCCH applied to the RRC inactive multicast service; and
obtaining, by the terminal device, the second DCI based on the configuration information of the MCCH applied to the RRC inactive multicast service.

9. The method according to claim 8, wherein the obtaining, by the terminal device, the configuration information of the MCCH applied to the RRC inactive multicast service comprises:
obtaining, by the terminal device by using a system message broadcast by the network device or by using unicast signaling when an RCC connection between the terminal device and the network device is released, the configuration information of the MCCH applied to the RRC inactive multicast service.

10. The method according to any one of claims 7 to 9, wherein the second DCI comprises:
a bit field used to indicate activation of the RRC inactive multicast service; and/or
a bit field used to indicate configuration update of the RRC inactive multicast service.

11. The method according to claim 5, wherein the first indication information is carried in the paging message; and
the first indication information further comprises an identifier of the terminal device that is to activate the first multicast service or update a configuration of the first multicast service.

12. A method for transmission of a multicast service, comprising:
determining, by a network device, first indication information, the first indication information being used to indicate activation or configuration update of a first multicast service; and
broadcasting, by the network device, the first indication information.

13. The method according to claim 12, wherein the first indication information comprises at least one of the following:
an identifier of the first multicast service;
a configuration identifier of the first multicast service;
a configuration update manner of the first multicast service, wherein the configuration update manner is a first update manner or a second update manner, the first update manner is performing configuration update by using a multicast control channel (MCCH), and the second update manner is reestablishing an RRC connection and performing configuration update by using a unicast manner; or
configuration information of the MCCH applied to an RRC inactive multicast service.

14. The method according to claim 12 or 13, wherein the first indication information is carried in any one of the following:
a system message;
downlink control information (DCI) of the MCCH; or
a paging message.

15. The method according to claim 14, wherein the first indication information is carried in first DCI of an MCCH applied to a broadcast service, and the first DCI comprises at least one of the following:
a bit field used to indicate activation of a conventional broadcast new service;
a bit field used to indicate configuration update of a conventional broadcast service;
a bit field used to indicate activation of the RRC inactive multicast service; or
a bit field used to indicate configuration update of the RRC inactive multicast service.

16. The method according to claim 14, wherein the first indication information is carried in second DCI of the MCCH applied to the RRC inactive multicast service, and an RNTI used to decode the second DCI is different from an RNTI used to decode first DCI of an MCCH applied to a broadcast service.

17. The method according to claim 16, further comprising:
sending, by the network device, the configuration information of the MCCH applied to the RRC inactive multicast service.

18. The method according to claim 17, wherein the sending, by the network device, the configuration information of the MCCH applied to the RRC inactive multicast service comprises:
sending, by the network device by using a system message or by using unicast signaling when an RCC connection between a terminal device and the network device is released, the configuration information of the MCCH applied to the RRC inactive multicast service.

19. The method according to any one of claims 16 to 18, wherein the second DCI comprises:
a bit field used to indicate activation of the RRC inactive multicast service; and/or
a bit field used to indicate configuration update of the RRC inactive multicast service.

20. The method according to claim 14, wherein the first indication information is carried in the paging message; and
the first indication information further comprises an identifier of the terminal device that is to activate the first multicast service or update a configuration of the first multicast service.

21. The method according to claim 20, further comprising:
sending, by the network device, second indication information to another network device, the second indication information being used to indicate paging a terminal device corresponding to the to-be-activated first multicast service or the to-be-updated configuration of the first multicast service.

22. The method according to claim 21, wherein the second indication information comprises at least one of the following:
an identifier of the terminal device;
an identifier of the first multicast service;
a configuration identifier of the first multicast service;
a configuration update manner of the first multicast service, wherein the configuration update manner is a first update manner or a second update manner, the first update manner is performing configuration update by using a multicast control channel (MCCH), and the second update manner is reestablishing an RRC connection and performing configuration update by using a unicast manner; or
configuration information of the MCCH applied to an RRC inactive multicast service.

23. An apparatus for transmission of a multicast service, comprising: a module configured to implement the method according to any one of claims 1 to 11, or a module configured to implement the method according to any one of claims 12 to 22.

24. An apparatus for transmission of a multicast service, comprising: a processor, being coupled to a storage, the storage being configured to store a computer program, and when the processor invokes the computer program, the apparatus being caused to implement the method according to any one of claims 1 to 11 or implement the method according to any one of claims 12 to 22.

25. A computer-readable storage medium, configured to store a computer program, the computer program comprising instructions used to implement the method according to any one of claims 1 to 11, or comprising instructions used to implement the method according to any one of claims 12 to 22.

26. A computer program product, comprising computer program code, and the computer program code, when run on a computer, causing the computer to implement the method according to any one of claims 1 to 11 or implement the method according to any one of claims 12 to 22.
